# EUROPEAN PATENT SPECIFICATION

(11) **EP 1 980 460 B1**
(45) Date of publication and mention of the grant of the patent: **11.11.2009**
(21) Application number: 07105864.8
(22) Date of filing: 10.04.2007
(51) Int. Cl.: B60T 7/06, G05G 1/32, B60R 21/09

(54) **Vehicle brake pedal crash safety device**
Aufprallsicherheitsvorrichtung für ein Fahrzeugbremspedal
Dispositif de sécurité contre la collision de pédale de frein de véhicule

(43) Date of publication of application: 15.10.2008
(73) Proprietor: Ford Global Technologies, LLC, Dearborn, MI 48126 (US)
(72) Inventor: Löfving, Björn, 41764, Göteborg (SE); Andersson, John-Erik, 440 60, Stora Höga (SE)
(74) Representative: Valea AB

(56) References cited:
- EP-A1- 1 440 859
- EP-A2- 1 074 445
- EP-A2- 1 557 330
- WO-A-02/051669

## Description

### TECHNICAL FIELD

The present invention is related to a vehicle brake pedal crash safety device.

### BACKGROUND OF THE INVENTION

On modern cars demands are raised on small outer dimensions, large inner space, strong drive lines and high level of equipment. The distance of collapse in the engine compartment during a crash is limited because of these demands. In order to achieve low values of deceleration during a crash the distance of collapse aught to be long. There is therefore a risk of conflict between these two demands. During a frontal crash, the front side members are compressed in order to absorb energy and keep the crash pulse low.

It is well known that when a motor vehicle is subjected to a large force such as a frontal impact, the vehicle structure and components are often displaced or deformed into the occupant area. This is potentially dangerous as it may result in injuries to the driver and passengers.

In general, vehicles, such as a motor vehicle, are equipped with a suspended brake pedal. This brake pedal is suspended on a dash panel by a pedal bracket. The dash panel is partitioning the vehicle into an engine compartment or room in front of the vehicle and a passenger compartment, The brake pedal is normally constructed such that it extends to the rear of the vehicle.

Further, the dash panel is a vehicle body component disposed adjacent to an engine in the engine room. Therefore, during a frontal collision of the vehicle, the engine can move toward the rear of the vehicle and press the dash panel. This causes the dash panel to deform and stick out toward the rear of the vehicle. Consequently, the brake pedal can move toward the rear of the vehicle.

It is a particular problem that the pedal arms provided for a driver to operate the brakes or clutch have to be very rigid in order to perform their designated tasks. Such rigid structures are potentially damaging in the event of interaction with a human being at the time of a crash.

In particular, if an operator is using a pedal at the time of a crash there is a risk that the pedal arm will be pushed rearwards by the impact causing the included angle between the upper surface of a foot of the operator and the leg to which the foot is attached to be reduced. This reduction in angle is likely to cause injury to the ankle joint connecting the foot to the leg.

Furthermore, when the front part of the car is deformed, it is common that the driveline hits the brake booster, which is then dislocated rearwards in the car. The brake booster is usually attached to the brake pedal arm through a pushrod. If the pushrod is moved rearwards equally as much as the usually higher positioned movement centre of the pedal, the pedal plate for the foot of the driver will move rearwards in the same proportion. This usually will not cause any significant injuries to a lower leg of an operator.

However, should the pushrod be moved rearwards more than a higher positioned movement centre of the brake pedal, the pedal plate will move rearwards more than the upper part of the brake pedal arm. This movement will usually be geared up at a ratio of approximately four to one. This may occur if the brake booster is dislocated more than the upper part of the pedal box. This may cause injuries to a lower leg of an operator.

Furthermore, if the brake booster is hit mainly at one side, this side might leave a higher intrusion than the other, which may have the consequence that the pedal box and the brake pedal arm will be slanting. This may also cause injuries to a lower leg of an operator.

Some previous attempts to reduce the risk of crash injuries caused by the brake pedal are based on the concept of releasing the break pedal arm, such that it is not possible to displace it further to the back of an associated vehicle.

One such previous attempt is illustrated by US 2004/0020324, which describes a pedal assembly for a motor vehicle in which a pedal lever in the form of a brake pedal is constructed as two separate pieces, a primary lever and a secondary lever pivotally connected by a pivot rod to a deformable part of the body structure of the motor vehicle.

The primary lever is constructed as a 'U' section and envelops the secondary lever. Both of the levers are attached together by a pivot, positioned below a brake booster pushrod and are clamped together by a latching means or catcher. During a crash event there is an interaction of the top of the catcher and another part of the vehicle structure, such as a cross-car beam, that is deformed at a different rate to the part to which the two levers are attached. If the crash is sufficiently severe to cause the beam to contact the catcher then it causes the catcher to pivot around the pivot rod allowing the primary lever to be released from the catcher. As the pivot of the primary and secondary levers is lower than that of the booster pushrod, the primary lever will rotate away from the lower leg of an operator thereby reducing potential injury to the operator.

However, US 2004/0020324 provides an arrangement where if the beam contacts the catcher then it causes the catcher to pivot around the pivot rod allowing the primary lever to be released from the catcher and rotate away from the lower leg of an operator, whereby, upon release, the angle of the pedal plate with respect to the foot of an operator will change rapidly, which may put unwanted stress on the lower leg and foot of the operator.

EP 1 074 445 describes a Vehicle brake pedal crash safety device, which comprises a brake pedal arm rotatably mountable to a first vehicle body component, such as a front bulkhead, the brake pedal arm being equipped with a first element shaped as a circle having its geometrical center at a movement centre of the brake pedal arm, a second element being mountable to a second vehicle body component, such as a cross-car beam, both elements being mountable such that a distance between a circular arc of the first locking element (4) and the second locking element is constant and provides a predetermined play there between for any brake pedal arm position, such that, if an external crash force is applied to the front of the vehicle such that it displaces the first vehicle body component toward the second vehicle body component, the play between the first and the second locking elements will be closed irrespective of the current pedal position.

### SUMMARY OF THE INVENTION

An object of the present invention is to provide an improved vehicle brake pedal crash safety device that may eliminate or at least reduce the potential injury to an operator or driver of a motor vehicle caused by a brake pedal arm during a frontal crash event.

According to a first aspect of the present invention this object is achieved in accordance with claim 1, which specifies that it comprises a brake pedal arm rotatably mountable to a first vehicle body component, such as a front bulkhead, the brake pedal arm being equipped with a first locking element shaped as a circle-sector having its geometrical center at a movement centre of the brake pedal arm, a second locking element being mountable to a second vehicle body component, such as a cross-car beam, both locking elements being mountable such that a distance between a circular arc of the first locking element and the second locking element is constant and provides a predetermined small play there between for any brake pedal arm position, such that, if an external crash force is applied to the front of the vehicle such that it displaces the first vehicle body component toward the second vehicle body component, the play between the first and the second locking elements will be closed irrespective of the current pedal position, thus preventing further rotation of the brake pedal arm through interlocking the first and second locking elements.

Further embodiments are listed in the dependent claims.

It will be appreciated that features of the invention are susceptible to being combined in any combination without departing from the scope of the invention as defined by the accompany claims.

### BRIEF DESCRIPTION OF THE DRAWINGS

By way of example only, embodiments of the present invention will now be described with reference to the accompanying drawings wherein:
Figure 1 shows a vehicle brake pedal crash safety device in accordance with a first embodiment of the present invention in a first pedal arm position;
Figure 2 shows a vehicle brake pedal crash safety device in accordance with a first embodiment of the present invention in a second pedal arm position;
Figure 3 shows a vehicle brake pedal crash safety device in accordance with a second embodiment of the present invention in a first pedal arm position.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

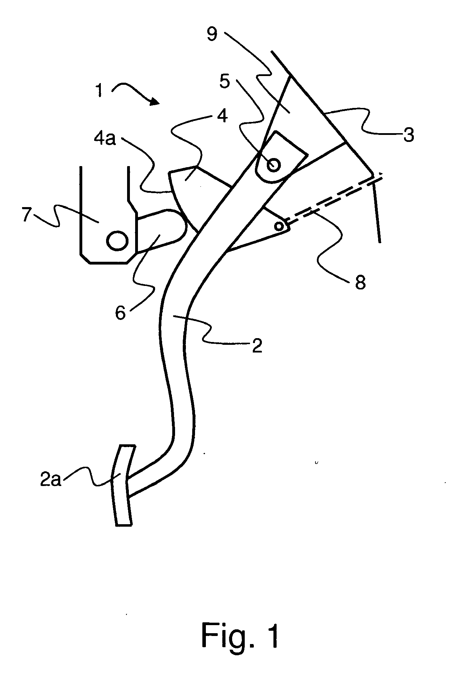

In a first embodiment of the present invention, as illustrated by FIG. 1, is shown a vehicle brake pedal crash safety device 1 in accordance with the present invention. The device 1 comprises a brake pedal arm 2, which is rotatably mountable to a first vehicle body component 3, such as a dash panel, front bulkhead or firewall. The first vehicle body component 3 is displaceable toward a rear of an associated vehicle when external force is applied to a front of the vehicle during a crash.

The brake pedal arm 2 is shaped as a normal pedal but equipped with a special crash safety feature through being equipped with a first locking element 4. The first locking element 4 is shaped as a circle-sector having its geometrical center at a movement centre 5 of the brake pedal arm 2. The circle-sector 4 is directed backwards of an associated car, towards an instrument panel (not shown) and its lower cross beam 7. A second locking element 6, resistance console or snubber, is mountable to a second vehicle body component 7, such as a cross-car beam, that is displaceable toward a rear of the associated vehicle at a different rate to the first vehicle body component 3 during a crash.

Both locking elements 4, 6 are mountable such that a distance between a circular arc 4a of the first locking element 4 and the second locking element 6 is constant and provides a predetermined small play there between for any allowed brake pedal arm 2 position, i.e. any position allowed during normal operation of the brake pedal, thus if an external crash force is applied to the front of the associated vehicle such that it displaces the first vehicle body component 3 toward the second vehicle body component 7, the play between the first and second locking elements will be closed irrespective of the current pedal position, thus preventing further rotation of the brake pedal arm 2 and preventing the brake pedal from being pressed rearwards of the associated vehicle at the level of the second locking element through interlocking the first and second locking elements 4,6.

Preferably the circular arc 4a of the first locking element 4 has an aggressive surface, e.g. saw teeth like surface. This surface may be arranged to interlock with the second locking element 6 through the second locking element 6 being provided with at least one sharp, e.g. knife edge like, projection arranged to hit in between two teeth on the circular arc 4a of the first locking element 4, thus interlocking the first and second locking elements 4,6. Alternatively, the second locking element 6 may have an aggressive surface, e.g. saw teeth like surface. This surface may be arranged to interlock with the first locking element 4 through the circular arc 4a of the first locking element 4 being provided with a series of sharp, e.g. knife edge like, projections at least one of which is arranged to hit in between two teeth on second locking element 6, thus interlocking the first and second locking elements 4, 6.

In yet another alternative embodiment the circular arc 4a of the first locking element 4 and the corresponding part of the second locking element 6 may both have aggressive surfaces, e.g. saw teeth like surfaces. These surfaces may be arranged to interlock with each other through the teeth thereof being arranged to hit in between each other in a meshing fashion, thus interlocking the first and second locking elements 4,6.

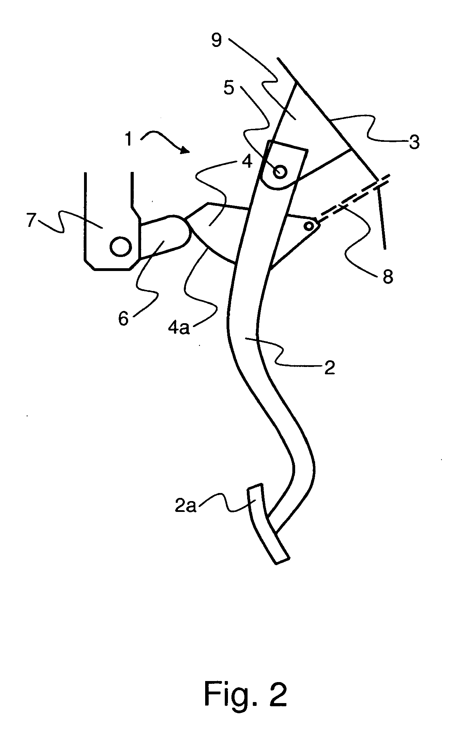

FIG. 2 illustrates the vehicle brake pedal crash safety device 1 in accordance with the first embodiment of the present invention in a second pedal arm 2 position, where the brake pedal arm 2 has been rotated a braking position.

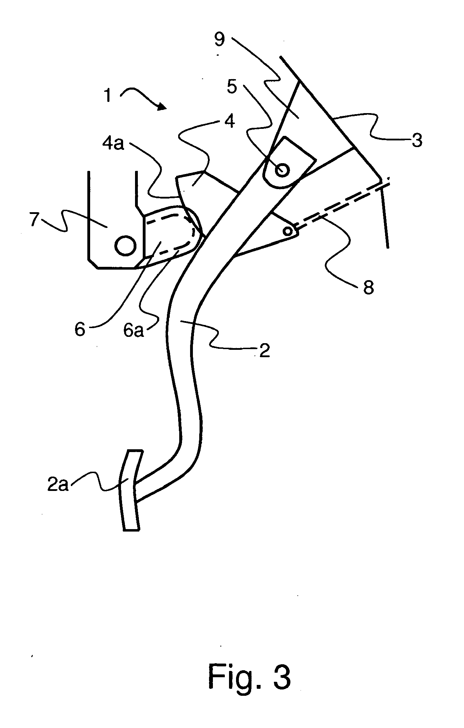

In a further embodiment, as illustrated by FIG. 3, is shown a vehicle brake pedal crash safety device 1 where the second locking element 6 is U-shaped 6a, with the opening of the U towards the first locking element 4, such that, when mounted, the circular arc 4a of the first locking element 4 is located inside the U-shape 6a of the second locking element 6. The lateral distance, i.e. lateral distance in respect to an associated vehicle, between the first locking element 4 and the second locking element 6 is constant and provides a predetermined small play there between for any pedal position, such that if the first locking element 4 is moved laterally during a crash due to twisting of the brake pedal arm 2, the play in the lateral direction between the first locking element 4 and second locking element 6 is closed irrespective of the current pedal position, thus preventing the brake pedal arm 2 from twisting further through interlocking the first and second locking elements 4, 6.

When the vehicle brake pedal crash safety device 1 is mounted to an associated vehicle a pushrod 8 is arranged between the brake pedal arm 2 and a brake servo booster (not shown). The brake servo booster is usually an hydraulic brake servo which is mounted in the engine compartment of a motor vehicle and has an input member in the form of a pushrod 8 extending through a dash panel, firewall or front bulkhead 3 separating an engine compartment from a passenger compartment to link the brake pedal arm 2 to the brake servo booster. The pushrod 8 is designed to handle all possible pedal forces originating from a driver of an associated vehicle with a margin, and to break and collapse when the force in the pushrod 8 is increased further. Thus, it will brake and collapse under any applied crash forces once the first and second locking elements 4, 6 have been interlocked. In this condition the pushrod 8 is not able to transfer any forces of importance to the brake pedal arm 2.

For mounting of the vehicle brake pedal crash safety device 1 a pedal box 9 or pedal bracket is arranged to be bolted at a first upper fixation to the brake servo booster and at a second fixation to the vehicle body in a lower point than the fixation to the brake servo booster. This lower fixation is to be positioned in height between the booster fixation and the pedal plate 2a, such that, if an external crash force is applied to the front of the associated vehicle such that the brake servo booster gets an intrusion earlier than the lower fixation of the pedal box 9, the pedal plate 2a will collapse and sink downwards of the associated vehicle.

When the pedal box 9 is bolted to the firewall 3 and booster, there is a risk that even the pedal box 9 is twisted. This may affect the brake pedal arm 2 which may also be twisted, which would result in a slanted pedal plate 2a. If the pedal plate 2a is slanted during a crash while a foot of a driver is heavily pressed towards it, there is a risk of injuries in the ankle joint of the driver. When the first locking element 4 is mowed sideways during a crash due to twisting of the pedal box 9, the small play in the lateral direction between the circle sector 4 and the second locking element 6 is rapidly closed. The brake pedal arm 2 will be stopped from twisting by the crash safety device 1, as the brake pedal arm 2 is designed to take higher forces than the pedal box 9 in this direction.

With this crash feature the brake pedal 2 will move some distance towards a floor of an associated vehicle at the beginning of a crash where after the brake pedal arm 2 will be locked in position both longitudinally and laterally with respect to the associated vehicle, resulting in a non-changing angle with respect to a foot of a driver, reducing risk of injuries to the lower leg of the driver.

Thus, in the event of a frontal or offset frontal collision in which the front bulkhead 3 is pushed back, the pedal box 9 is also moved rearwardly allowing the first locking element 4 to contact the second locking element 6 at the second vehicle body component 7, e.g. the cross-car beam. The interaction between the second locking element 6 at the cross-car beam 7 and the first locking element 4 will, if the pedal box 9 has been moved back a sufficient distance, prevent the brake pedal 2 from being pressed rearwards of the associated vehicle at the level of the second locking element 6.

In accordance with the present invention is also envisaged an automotive vehicle, which comprises a vehicle brake pedal crash safety device as described above.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

## Claims

1. Vehicle brake pedal crash safety device (1), which comprises a brake pedal arm (2) rotatably mountable to a first vehicle body component (3), such as a front bulkhead, the brake pedal arm (2) being equipped with a first locking element (4) shaped as a circle-sector having its geometrical center at a movement centre (5) of the brake pedal arm (2), a second locking element (6) being mountable to a second vehicle body component (7), such as a cross-car beam, both locking elements (4, 6) being mountable such that a distance between a circular arc (4a) of the first locking element (4) and the second locking element (6) is constant and provides a predetermined small play there between for any brake pedal arm (2) position, such that, if an external crash force is applied to the front of the vehicle such that it displaces the first vehicle body component (3) toward the second vehicle body component (7), the play between the first and the second locking elements will be closed irrespective of the current pedal position, thus preventing further rotation of the brake pedal arm (2) through interlocking the first and second locking elements (4, 6).

2. Device according to claim 1, **characterised in that** the circular arc (4a) of the first locking element (4) has an aggressive surface.

3. Device according to claim 1, **characterised in that** the second locking element (6), has an aggressive surface.

4. Device according to claim 1, **characterised in that** both of the circular arc (4a) of the first locking element (4) and the corresponding part of the second locking element (6), have aggressive surfaces.

5. Device according to any one of claims 1 to 4, **characterised in that** the second locking element (6) is U-shaped (6a) towards the first locking element (4), such that, when mounted, the circular arc (4a) of the first locking element (4) is located inside the U-shape (6a) of the second locking element (6), and that a lateral distance between the first locking element (4) and the second locking element (6) is constant and provides a predetermined small play there between for any pedal position, such that, if the first locking element (4) is moved laterally during a crash due to twisting of the brake pedal arm (2), the play in lateral direction between the first locking element (4) and second locking element (6) will be closed irrespective of the current pedal position, thus preventing the brake pedal arm (2) from twisting further through interlocking the first and second locking elements (4, 6).

6. Device according to any one of claims 1 to 5, **characterised in that** when the device is mounted to an associated vehicle a pushrod (8) is arranged between the brake pedal arm (2) and a brake servo booster of the associated vehicle, which pushrod (8) is designed to handle all possible pedal forces originating from a driver of the associated vehicle with a margin, and to break and collapse if the force in the pushrod (8) is increased further.

7. Device according to claims 6, **characterised in that** a pedal box (9) is arranged to be bolted at a first upper fixation to the brake servo booster and at a second fixation to the vehicle body in a lower point than the fixation to the brake servo booster where this lower fixation is positioned in height between the booster fixation and the pedal plate (2a) such that, if an external crash force is applied to the front of the associated vehicle such that if the brake servo booster gets an intrusion earlier than the lower fixation of the pedal box (9), the pedal plate (2a) will collapse and sink downwards of the associated vehicle.

8. An automotive vehicle **characterised in that** it comprises a vehicle brake pedal crash safety device (1) according to any one of the preceding claims.

## Patentansprüche

1. Aufprallsicherheitsvorrichtung für ein Fahrzeugbremspedal, umfassend einen Bremspedalarm (2), der drehbar an einem ersten Fahrzeug-Karosserieelement (3), etwa einer vorderen Spritzwand, befestigbar ist, wobei der Bremspedalarm (2) mit einem ersten Verriegelungselement (4) ausgestattet ist, das als Kreissektor geformt ist, welcher seine geometrische Mitte in einem Bewegungszentrum (5) des Bremspedalarms (2) hat, wobei ein zweites Verriegelungselement (6) an einem zweiten Fahrzeug-Karosserieelement (7), etwa einem Fahrzeug-Querträger befestigbar ist, und wobei beide Verriegelungselemente (4,6) so befestigbar sind, dass ein Abstand zwischen einem Kreisbogen (4a) des ersten Verriegelungselements (4) und dem zweiten Verriegelungselement (6) konstant ist und für jede beliebige Position des Bremspedalarms (2) ein vorbestimmtes kleines Spiel zwischen diesen beiden zur Verfügung stellt, so dass, falls eine externe Aufprallkraft so auf die Front des Fahrzeugs einwirkt, dass sie das erste Fahrzeug-Karosserieelement (3) auf das zweite Fahrzeug-Karosserieelement (7) zu verlagert, das Spiel zwischen den ersten und beiden Verriegelungselementen unabhängig von der gegenwärtigen Pedalposition auf Null reduziert und somit eine weitere Rotation des Bremspedalarms (2) durch ineinandergreifendes Verriegeln der ersten und zweiten Verriegelungselemente (4,6) verhindert wird.

2. Vorrichtung nach Anspruch 1, **dadurch gekennzeichnet, dass** der Kreisbogen (4a) des ersten Verriegelungselementes (4) eine aggressive Oberfläche hat.

3. Vorrichtung nach Anspruch 1, **dadurch gekennzeichnet, dass** das zweite Verriegelungselement (6) eine aggressive Oberfläche hat.

4. Vorrichtung nach Anspruch 1, **dadurch gekennzeichnet, dass** sowohl der Kreisbogen (4a) des ersten Verriegelungselementes (4) als auch der entsprechende Teil des zweiten Verriegelungselementes (6) eine aggressive Oberfläche haben.

5. Vorrichtung nach einem der Ansprüche 1 bis 4, **dadurch gekennzeichnet, dass** das zweite Verriegelungselement (6) U-förmig (6a) zum ersten Verriegelungselement (4) hin ist, so dass sich im montierten Zustand der Kreisbogen (4a) des ersten Verriegelungselementes (4) innerhalb der U-Form (6a) des zweiten Verriegelungselementes (6) befindet und dass ein seitlicher Abstand zwischen dem ersten Verriegelungselement (4) und dem zweiten Verriegelungselement (6) konstant ist und für jede beliebige Position des Bremspedalarms (2) ein vorbestimmtes kleines Spiel zwischen diesen beiden zur Verfügung stellt, so dass, falls das erste Verrieglungselement (4) während eines Aufpralls aufgrund eines Verbiegens des Bremspedalarms (2) seitlich bewegt wird, das Spiel in seitlicher Richtung zwischen dem ersten Verriegelungselement (4) und dem zweiten Verriegelungselement (6) unabhängig von der gegenwärtigen Pedalposition auf Null reduziert und somit ein weiteres Verbiegen des Bremspedalarms (2) durch ineinandergreifendes Verriegeln der ersten und zweiten Verriegelungselemente (4,6) verhindert wird.

6. Vorrichtung nach einem der Ansprüche 1 bis 5, **dadurch gekennzeichnet, dass**, wenn die Vorrichtung an einem zugeordneten Fahrzeug montiert ist, eine Schubstange (8) zwischen dem Bremspedalarm (2) und einem Bremskraftverstärker des zugeordneten Fahrzeugs angeordnet ist, die so gestaltet ist, dass sie alle möglichen Pedalkräfte zuzüglich eines Sicherheitszuschlags aufnehmen kann, die von einem Fahrer des zugeordneten Fahrzeugs herrühren, und bricht und zusammenfällt, wenn die Kraft in der Schubstange (8) weiter erhöht wird.

7. Vorrichtung nach Anspruch 6, **dadurch gekennzeichnet, dass** ein Pedalkasten (9) so angeordnet ist, dass er an einer ersten oberen Befestigungsstelle an dem Bremskraftverstärker und an einer zweiten Befestigungssteile an der Fahrzeugkarosserie an einem niedrigeren Punkt als der l3efestigungsstelle an dem Bremskraftverstärker angeschraubt wird, wobei diese niedrigere l3efestigungsstelle in der Höhe zwischen der Befestigungsstelle am Bremskraftverstärker und der Pedalplatte (2a) angeordnet ist, so dass, falls eine externe Aufprallkraft auf die Front des zugeordneten Fahrzeugs so einwirkt, dass der Bremskraftverstärker früher als die untere Befestigungsstelle des Pedalkastens (9) eindringt, die Pedalplatte (2a) zusammenfällt und in dem zugeordneten Fahrzeug nach unten sinkt.

8. Automobil, **dadurch gekennzeichnet, dass** es eine (1) Vorrichtung nach einem der vorhergehenden Ansprüche umfasst.

## Revendications

1. Dispositif de sécurité (1) pour pédale de frein d'un véhicule en cas de collision, qui comprend un levier (2) de pédale de frein monté rotatif sur un premier composant (3) de la carrosserie du véhicule, tel qu'une cloison-moteur, le levier (2) de pédale de frein étant équipé d'un premier élément de blocage (4) conformé en secteur de cercle ayant son centre géométrique sur un centre (5) de mouvement du levier (2) de pédale de frein, un deuxième élément de blocage (6) pouvant être monté sur un deuxième composant (7) de la carrosserie du véhicule, tel qu'une entretoise transversale, les deux éléments de blocage (4, 6) pouvant être montés de telle sorte qu'une distance entre un arc de cercle (4a) du premier élément de blocage (4) et le deuxième élément de blocage (6) soit constante et offre un léger jeu prédéterminé entre eux pour toute position du levier (2) de pédale de frein, de telle sorte que, si la force d'une collision extérieure est appliquée à l'avant du véhicule de façon telle qu'elle déplace le premier composant (3) de la carrosserie du véhicule vers le deuxième composant (7) de la carrosserie du véhicule, le jeu entre le premier et le deuxième éléments de blocage soit supprimé quelle que soit la position courante de la pédale, empêchant ainsi toute poursuite de rotation du levier (2) de pédale de frein par blocage mutuel du premier et du deuxième éléments de verrouillage (4, 6).

2. Dispositif selon la revendication 1, ***caractérisé en ce que*** l'arc de cercle (4a) du premier élément de blocage (4) possède une surface agressive.

3. Dispositif selon la revendication 1, ***caractérisé en ce que*** le deuxième élément de blocage (6) possède une surface agressive.

4. Dispositif selon la revendication 1, ***caractérisé en ce que**,* à la fois l'arc de cercle (4a) du premier élément de blocage (4) et la partie correspondante du deuxième élément de blocage (6) possèdent des surfaces agressives.

5. Dispositif selon l'une quelconque des revendications 1 à 4, ***caractérisé en ce que*** le deuxième élément de blocage (6) est conformé en U (6a) en direction du premier élément de blocage (4), de telle sorte que, une fois monté, l'arc de cercle (4a) du premier élément de blocage (4) soit situé à l'intérieur de la forme en U (6a) du deuxième élément de blocage (6), et qu'une distance latérale entre le premier élément de blocage (4) et le deuxième élément de blocage (6) soit constante et offre un léger jeu prédéterminé entre eux pour toute position de la pédale, de telle sorte que, si le premier élément de blocage (4) est déplacé latéralement au cours d'une collision par suite d'une torsion du levier (2) de la pédale de frein, le jeu dans la direction latérale entre le premier élément de blocage (4) et le deuxième élément de blocage (6) soit supprimé quelle que soit la position courante de la pédale, empêchant ainsi toute poursuite de la torsion du levier (2) de pédale de frein par blocage mutuel du premier et du deuxième éléments de verrouillage (4, 6).

6. Dispositif selon l'une quelconque des revendications 1 à 5, ***caractérisé en ce que**,* lorsque le dispositif est monté dans un véhicule associé, une tige de poussée (8) soit placée entre le levier (2) de la pédale de frein et un servofrein du véhicule associé, cette tige de poussée (8) étant conçue pour faire face à toutes les forces possibles de la pédale ayant pour origine un conducteur du véhicule associé, avec une certaine marge, et pour se briser et chuter si la force dans la tige de poussée (8) augmente encore.

7. Dispositif selon la revendication 6, ***caractérisé en ce qu'***un pédalier (9) est prévu pour être boulonné au servofrein au niveau d'une première fixation supérieure et à la carrosserie du véhicule au niveau d'une deuxième fixation en un point inférieur à la fixation au servofrein, cette fixation inférieure étant placée en hauteur entre la fixation au servofrein et le patin (2a) de pédale de façon que, si la force d'une collision extérieure est appliquée à l'avant du véhicule associé de telle sorte qu'il y ait intrusion sur le servofrein avant la fixation inférieure du pédalier (9), le patin (2a) de la pédale s'effondre et plonge vers le bas du véhicule associé.

8. Véhicule automobile ***caractérisé en ce qu'***il comprend un dispositif de sécurité (1) pour pédale de frein d'un véhicule en cas de collision selon l'une quelconque des revendications précédentes.
